# EUROPEAN PATENT APPLICATION

(11) **EP 1 647 874 A2**
(43) Date of publication of application: **19.04.2006**
(21) Application number: 05022260.3
(22) Date of filing: 12.10.2005
(51) Int. Cl.: G06F 1/00

(54) **Contents delivery management apparatus and contents delivery management method**

(30) Priority: 15.10.2004 JP 2004302175
(71) Applicant: NTT DoCoMo, Inc., Tokyo 100-6150 (JP)
(72) Inventor: Uno, Shigeto, Tokyo 100-6150 (JP); Tani, Sohei, Tokyo 100-6150 (JP); Kikuchi, Daisuke, Tokyo 100-6150 (JP); Iwashita, Akiko, Tokyo 107-0052 (JP)
(74) Representative: Bockhorni, Josef

(57) **Abstract**

Provided are a contents delivery management apparatus and a contents delivery management method capable of appropriately charging users, independent of stability of a network. A contents delivery management apparatus is configured to delete a one-time password checked upon delivery of contents, in conjunction with the delivery of the contents, and to generate charge information to a user only when the deleting process is finished. For this reason, for example, even if a network has communication error such as instantaneous chopping to cause multiple notifications of transmission completion of the contents to the contents delivery management apparatus, multiple generation of charge information can be avoided because the password corresponding to the contents once transmitted to the communication terminal has already been deleted from a password storage. Therefore, an appropriate charge can be imposed to the user, independent of stability of the network.

## Description

### BACKGROUND OF THE INVENTION

### Field of the Invention

The present invention relates to a contents delivery management apparatus and contents delivery management method.

### Related Background of the Invention

One of the conventional technologies associated with the field of this kind is the contents delivery system, for example, disclosed in Japanese Patent Application Laid-Open No. 2004-48157. In this conventional contents delivery system, contents request information transmitted from a terminal is accompanied by information for specifying a user, and an authentication server performs authentication of the user. After the authentication server successfully performs the authentication of the user, the contents request information is transmitted to a delivery server and charge information to the user is transmitted to a charge server.

### SUMMARY OF THE INVENTION

Incidentally, the contents delivery system described in the above-cited document is premised on the assumption that a network used for communication between servers or between a terminal and a server is stable, in order to perform appropriate charging to the user. From the viewpoint of improvement in reliability for users, however, there are desires for a technology that can secure execution of appropriate charging to users even with occurrence of communication error such as instantaneous chopping in the network.

The present invention has been accomplished in order to solve the above problem, and an object of the invention is to provide a contents delivery management apparatus and contents delivery management method capable of appropriately charging users, independent of the stability of the network.

In order to solve the above problem, a contents delivery management apparatus according to the present invention comprises password transmitting means for transmitting a password to a communication terminal in accordance with reception of transmission request information transmitted from the communication terminal and requesting transmission of contents; password storing means for storing the password transmitted by the password transmitting means; contents transmitting means for receiving a password transmitted from the communication terminal, for checking the received password against the password stored in the password storing means, and for transmitting the contents to the communication terminal when the passwords agree with each other; password deleting means for deleting the password stored in the password storing means when the transmission of the contents is accomplished by the contents transmitting means; and charge information generating means for generating charge information to a user using the communication terminal when the deletion of the password is finished by the password deleting means.

In this contents delivery management apparatus, the password checked upon transmission of the contents is deleted with the transmission of the contents, and the charge information to the user is generated upon completion of this deleting process. For this reason, for example, even if communication error such as instantaneous chopping occurs in the network to cause multiple notifications of transmission completion of the contents on the delivery management apparatus side, multiple generation of charge information can be avoided because the password corresponding to the contents once transmitted to the communication terminal has already been deleted. Therefore, appropriate charging to the user can be performed independent of the stability of the network.

Preferably, the password is a one-time password differing every reception of the transmission request information. In this case, a different password is issued every transmission request for the contents, which can effectively prevent the user from improperly downloading the contents.

A contents delivery management method according to the present invention comprises a step wherein password transmitting means transmits a password to a communication terminal in accordance with reception of transmission request information transmitted from the communication terminal and requesting transmission of contents; a step wherein password storing means stores the password transmitted by the password transmitting means; a step wherein contents transmitting means receives a password transmitted from the communication terminal, checks the received password against the password stored in the password storing means, and transmits the contents to the communication terminal when the passwords agree with each other; a step wherein password deleting means deletes the password stored in the password storing means when the transmission of the contents is accomplished by the contents transmitting means; and a step wherein charge information generating means generates charge information to a user using the communication terminal when the deletion of the password is finished by the password deleting means.

In this contents delivery management method, the password checked upon transmission of the contents is deleted with the transmission of the contents and the charge information to the user is generated upon completion of this deleting process. For this reason, for example, even if communication error such as instantaneous chopping occurs in the network to cause multiple notifications of transmission completion of the contents on the delivery management apparatus side, multiple generation of charge information can be avoided because the password corresponding to the contents once transmitted to the communication terminal has already been deleted. Therefore, appropriate charging to the user can be performed independent of the stability of the network.

Preferably, the password is a one-time password differing every reception of the transmission request information. In this case, a different password is issued every transmission request for the contents, which can effectively prevent the user from improperly downloading the contents.

As described above, the contents delivery management apparatus and contents delivery management method according to the present invention are able to perform the appropriate charging to the user, independent of the stability of the network.

### BRIEF DESCRIPTION OF THE DRAWINGS

Fig. 1 is a configuration diagram showing an embodiment of the contents delivery management apparatus according to the present invention.
Fig. 2 is an illustration showing an example of information stored in a password storage.
Fig. 3 is a sequence diagram showing an operation of the contents delivery management apparatus shown in Fig. 1.

### DESCRIPTION OF THE PREFERRED EMBODIMENTS

The preferred embodiments of the contents delivery management apparatus and contents delivery management method according to the present invention will be described below in detail with reference to the drawings.

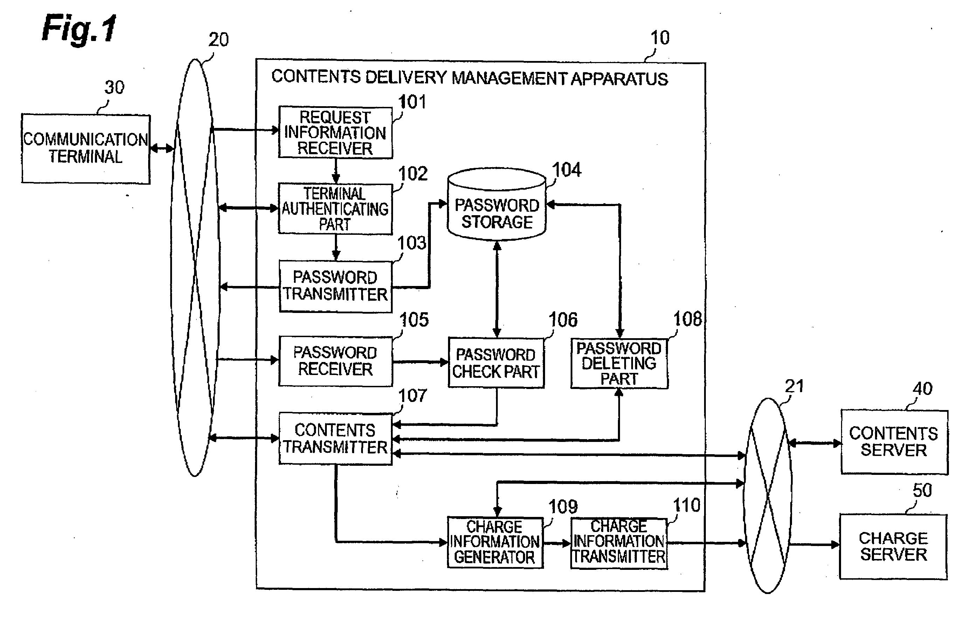

Fig. 1 is a configuration diagram showing an embodiment of the contents delivery management apparatus constructed according to the present invention. The configuration of the contents delivery management apparatus 10 will be described with reference to Fig. 1. In Fig. 1, the contents delivery management apparatus 10 is connected through network 20 to communication terminal 30 so as to be able to perform information communication with each other. The contents delivery management apparatus 10 is also connected through network 21 to contents server 40 and to charge server 50 so as to be able to perform information communication with these servers. Constructed in this configuration is a system for transmitting contents to communication terminal 30 in response to a transmission request for contents. The contents delivery management apparatus 10 functions to manage delivery and charging for contents in this system. The network 20 includes a download monitoring server (not shown) and this download monitoring server continually monitors download situations of contents. Subsequently, each of components will be described in detail.

Communication terminal 30 is a device owned by a user using this system, and is configured as a cell phone, for example, equipped with a normal voice communication function and a data communication function. This communication terminal 30, physically, has a CPU (central processing unit), a storage device such as a memory, an input device such as push buttons, a display device such as a display, and so on.

When connected to the contents delivery management apparatus 10, a contents purchase screen is displayed on this communication terminal 30. When the user selects contents on the contents purchase screen, the communication terminal 30 transmits transmission request information for requesting transmission of the selected contents, to the contents delivery management apparatus 10. This transmission request information also includes terminal identification information for specifying the communication terminal 30 (e.g., a phone number of communication terminal 30). When receiving password request information requesting an authentication password for access from the contents delivery management apparatus 10 in accordance with the transmission of the transmission request information, the communication terminal 30 displays an authentication password input screen. The communication terminal 30 transmits an authentication password entered on the authentication password input screen by the user, to the contents delivery management apparatus 10.

Furthermore, when a one-time password described later is received from the contents delivery management apparatus 10 in connection with the transmission of the authentication password, a download screen for the contents is displayed on the communication terminal 30 to confirm user's willingness to download the contents, for example. When the user performs an operation of agreeing to download the contents, the communication terminal 30 transmits download request information for requesting a download of the contents, and the one-time password to the contents delivery management apparatus 10. This download request information also includes the terminal identification information for specifying the communication terminal 30 (e.g., the phone number of communication terminal 30) as the transmission request information does. The communication terminal 30 can recognize the one-time password, for example, by CGI (Common Gateway Interface), and the user is not notified of reception of the one-time password or the contents of the one-time password.

The contents server 40 is a server managed by a delivery service provider for delivering contents to communication terminal 30. The contents server 40 is, physically, a computer system equipped with a CPU, a memory, a communication interface, a storage part such as a hard disk, a display part such as a display, and so on. This contents server 40 stores contents data necessary for communication terminal 30 to use delivered contents. The contents data stated herein includes various data, for example, such as music data, video data, and information search result data.

When receiving check result information described later and the download request information from the contents delivery management apparatus 10, the contents server 40 transmits the contents data corresponding to the requested contents, to the contents delivery management apparatus 10. When the contents server 40 receives from the contents delivery management apparatus 10 transmission completion information indicating completion of the transmission of the contents to the communication terminal 30, after the transmission of the contents data, it determines whether charge information to the user is to be generated, and transmits charge indication information indicating a result of the determination, to the contents delivery management apparatus 10. On the other hand, when the contents server 40 receives from the contents delivery management apparatus 10 incomplete transmission information indicating incomplete transmission of the contents to the communication terminal 30, it does not perform transmission of the charge indication information.

The charge server 50 is a server for receiving charge information from the contents delivery management apparatus 10 and for managing a charge amount indicated by the information, for each user of communication terminal 30. The charge server 50 is, physically, a computer system equipped with a CPU, a memory, a communication interface, a storage part such as a hard disk, a display part such as a display, etc. as the contents server 40 is.

Subsequently, the contents delivery management apparatus 10 described above will be described in detail. The contents delivery management apparatus 10 is, physically, a computer system equipped with a CPU, a memory, a communication interface, a storage part such as a hard disk, a display part such as a display, and so on. The contents delivery management apparatus 10 has the following functional components: request information receiver 101, terminal authenticating part 102, password transmitter (password transmitting means) 103, password storage (password storing means) 104, password receiver (contents transmitting means) 105, password check part (contents transmitting means) 106, contents transmitter (contents transmitting means) 107, password deleting part (password deleting means) 108, charge information generator (charge information generating means) 109, and charge information transmitter 110. Subsequently, each of the components of the contents delivery management apparatus 10 will be described.

The request information receiver 101 is a part that receives transmission request information requesting transmission of contents from communication terminal 30. The request information receiver 101 outputs the received transmission request information to the terminal authenticating part 102.

The terminal authenticating part 102 is a part that performs authentication of communication terminal 30. When receiving the transmission request information from the request information receiver 101, the terminal authenticating part 102 transmits password request information for requesting an authentication password, to communication terminal 30. When receiving the authentication password from communication terminal 30 as a response to the password request information, the terminal authenticating part 102 performs authentication of communication terminal 30 based on this authentication password. When in this authentication the terminal authenticating part 102 determines that the received authentication password is valid, it generates authentication result information indicating a success in the authentication of the communication terminal 30 and outputs this authentication result information and transmission request information to password transmitter 103.

When the terminal authenticating part 102 determines that the received authentication password is invalid, it generates authentication result information indicating a failure in the authentication of communication terminal 30. In this case, for example, the terminal authenticating part 102 transmits the authentication result information to communication terminal 30 to notify the user of communication terminal 30 of the failure in the authentication of the terminal.

The password transmitter 103 is a part that transmits a one-time password to communication terminal 30 in accordance with the transmission of the transmission request information from communication terminal 30. More specifically, when receiving the authentication result information indicating a success in the authentication of the communication terminal 30 and the transmission request information from terminal authenticating part 102, the password transmitter 103 generates a one-time password differing every reception of transmission request information and transmits it to communication terminal 30. The password transmitter 103 generates a copy of the one-time password transmitted to the communication terminal 30, and outputs this copy of the one-time password and the terminal identification information of communication terminal 30 included in the transmission request information, to the password storage 104.

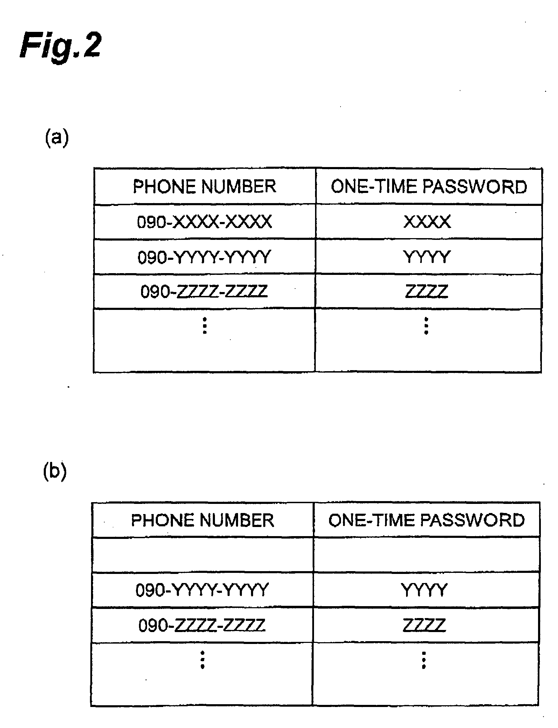

The password storage 104 is a part that receives the copy of the one-time password outputted from the password transmitter 103 and stores this one-time password. An example of information stored in the password storage 104 is shown in Fig. 2(a). In the example of Fig. 2(a), phone number "090-XXXX-XXXX" of communication terminal 30, and copy "XXXX" of the one-time password transmitted to communication terminal 30 are stored in association with each other. Similarly, phone numbers "090-YYYY-YYYY" and "090-ZZZZ-ZZZZ" of terminals other than communication terminal 30 are also stored as needed in association with copies "YYYY" and "ZZZZ" of one-time passwords transmitted to these terminals.

The password receiver 105 is a part that receives the download request information and one-time password transmitted from communication terminal 30. The password receiver 105 outputs the received download request information and one-time password to the password check part 106.

The password check part 106 is a part that receives the download request information and one-time password from the password receiver 105, and part that checks this one-time password (i.e., the one-time password transmitted from communication terminal 30) against one-time passwords stored in the password storage 104. More specifically, the password check part 106 references the password storage 104 on the basis of the terminal identification information (phone number) of communication terminal 30 included in the download request information, to check whether the password storage 104 stores the one-time password agreeing with the one-time password received from the password receiver 105. Then the password check part 106 generates check result information indicating a result of the check of the one-time password and outputs this check result information together with the download request information to the contents transmitter 107.

The contents transmitter 107 is a part that transmits contents to communication terminal 30. More specifically, the contents transmitter 107 checks whether the download request information received from the password check part 106 is unauthorized in terms of formality (e.g., whether it. has a predetermined header), or the like. When receiving the check result information indicating confirmation of agreement of the one-time password from the password check part 106, the contents transmitter 107 transmits the download request information thus checked in formality, to the contents server 40. Then the contents transmitter 107 receives the contents data transmitted from the contents server 40 on the basis of the download request information, and transmits this contents data to the communication terminal 30. The check result information may also be arranged to be simultaneously transmitted to the contents server 40 on the occasion of transmission of the download request information from the contents transmitter 107.

When the contents transmitter 107 receives a notification of completion of the download of the contents from the download monitoring server (not shown) monitoring downloads of contents in the network 20, it outputs indication information indicating execution of a process of deleting the one-time password, together with the download request information to the password deleting part 108. Then the contents transmitter 107 receives completion information indicating completion of the deleting process from the password deleting part 108, and thereafter outputs this completion information to the charge information generator 109.

On the other hand, when the contents transmitter 107 receives the check result information indicating the failure in confirmation of the agreement of the one-time password from the password check part 106, it does not perform transmission of the download request information to the contents server 40. In this case, for example, the contents transmitter 107 transmits the check result information indicating the failure in agreement of the one-time password to the communication terminal 30, to notify the user of communication terminal 30 of the prohibition of the download of the contents.

The password deleting part 108 is a part that receives the indication information and download request information from the contents transmitter 107. When receiving the indication information and download request information, the password deleting part 108 performs a process of deleting the one-time password corresponding to the terminal identification information included in the download request information (the one-time password used in the check by the password check part 106 on the occasion of the download) from the password storage 104. Namely, this deleting process results in, as shown in Fig. 2(b), deleting the phone number "090-XXXX-XXXX" 11 of communication terminal 30 and the corresponding one-time password "XXXX" from the password storage 104.

After completion of the deleting process of the pertinent one-time password, the password deleting part 108 outputs completion information indicating normal completion of the deleting process, to the contents transmitter 107. On the other hand, when there is no pertinent one-time password in the password storage 104, so as to fail in normal completion of the deleting process, the password deleting part 108 outputs completion information indicating a failure in normal completion of the deleting process, to the contents transmitter 107.

The charge information generator 109 is a part that generates charge information to the user using communication terminal 30. More specifically, when the charge information generator 109 receives the completion information indicating normal completion of the deleting process from the contents transmitter 107, it transmits complete transmission information indicating completion of the transmission of the contents to the communication terminal 30, to the contents server 40. This complete transmission information is transmitted, for example, by HTTP (Hypertext Transfer Protocol).

When receiving the charge indication information from the contents server 40 in response to the transmission of the complete transmission information, the charge information generator 109 generates charge information to the user using the communication terminal 30, on the basis of the received charge indication information, and outputs it to the charge information transmitter 110. On the other hand, when the charge information generator 109 receives the completion information indicating the failure in the normal completion of the deleting process from the contents transmitter 107, it transmits incomplete transmission information indicating the failure in completion of transmission of the contents, to the contents server 40.

The charge information transmitter 110 is a part that receives the charge information from the charge information generator 109. The charge information transmitter 110 transmits the received charge information to the charge server 50.

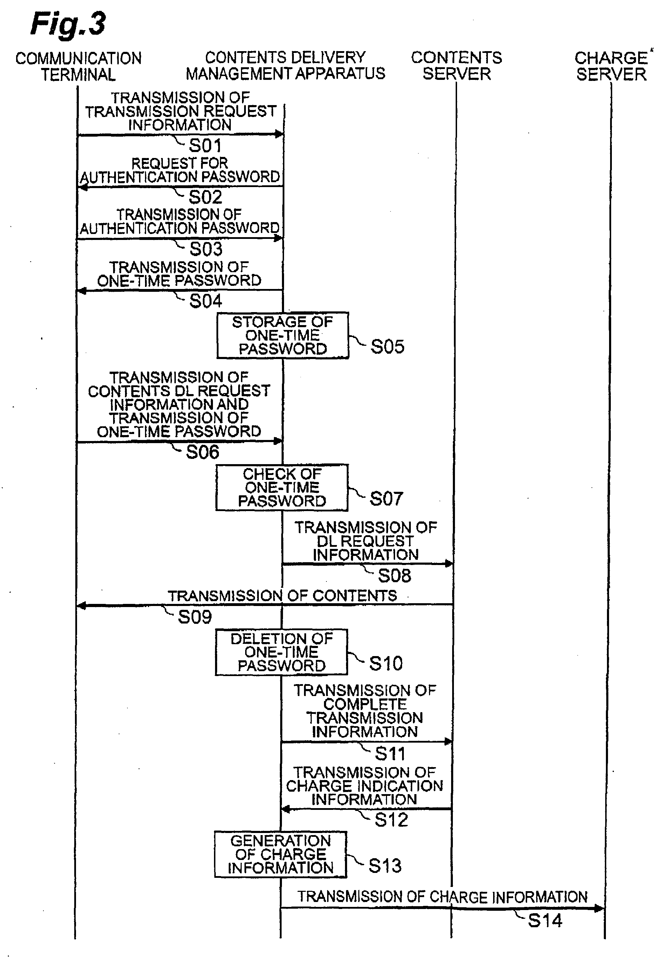

Next, the operation of the contents delivery management apparatus 10 will be described with reference to the sequence diagram shown in Fig. 3.

First, communication terminal 30 is connected to the contents delivery management apparatus 10, whereupon the contents purchase screen is displayed on the communication terminal 30. When the user selects contents on the contents purchase screen, the communication terminal 30 transmits the transmission request information for requesting transmission of the selected contents, to the contents delivery management apparatus 10 (step S01). The transmission request information transmitted from the communication terminal 30 is received by the request information receiver 101 and is outputted to the terminal authenticating part 102. When receiving the transmission request information from the request information receiver 101, the terminal authenticating part 102 transmits the password request information for requesting an authentication password, to the communication terminal 30 (step S02).

The authentication password input screen is displayed on the communication terminal 30 having received the password request information. When the user enters the authentication password on the authentication password input screen, the communication terminal 30 transmits this authentication password to the contents delivery management apparatus 10 (step S03).

The authentication password transmitted from communication terminal 30 is received by terminal authenticating part 102. The terminal authenticating part 102 performs the authentication of communication terminal 30 on the basis of this authentication password. When the terminal authenticating part 102 determines that the authentication password is valid, it generates the authentication result information indicating a success in the authentication of the communication terminal 30. Then the terminal authenticating part 102 outputs the generated authentication result information together with the transmission request information to the password transmitter 103. When the terminal authenticating part 102 determines that the authentication password is invalid, it generates the authentication result information indicating a failure in the authentication of the communication terminal 30. In this case, for example, the terminal authenticating part 102 transmits the authentication result information to the communication terminal 30 to notify the user of the communication terminal 30 of the failure in the authentication of the terminal.

When the authentication of the communication terminal 30 is successfully accomplished, the password transmitter 103 receiving the authentication result information and transmission request information generates a one-time password and transmits it to the communication terminal 30 (step S04). The password transmitter 103 generates a copy of the one-time password transmitted to the communication terminal 30, and outputs this copy of the one-time password and the terminal identification information of the communication terminal 30 included in the transmission request information, to the password storage 104. The password storage 104 stores the copy of the one-time password and the terminal identification information of the communication terminal 30 outputted from the password transmitter 103, in association with each other (step S05).

The download screen for the contents is displayed on the communication terminal 30 receiving the one-time password to confirm user's willingness to download the contents, for example. When the user performs an operation of agreeing to download the contents, the communication terminal 30 transmits the download request information for requesting the download of the contents and the one-time password to the contents delivery management apparatus 10 (step S06). The password receiver 105 receives the transmitted download request information and the one-time password and outputs them to the password check part 106.

Receiving the download request information and the one-time password, the password check part 106 references the password storage 104 on the basis of the terminal identification information of the communication terminal 30 included in the download request information, and checks whether the password storage 104 stores the one-time password agreeing with the one-time password received from the password receiver 105 (step S07). Then the password check part 106 generates the check result information indicating the result of the check on the one-time password, and outputs this check result information with the download request information to the contents transmitter 107.

When receiving the check result information indicating disagreement of the one-time password from the password check part 106, the contents transmitter 107 does not perform the transmission of the download request information to the contents server 40. In this case, for example, the contents transmitter 107 transmits the check result information indicating disagreement of the one-time password to the communication terminal 30, to notify the user of the communication terminal 30 that the download of the contents is not permitted.

On the other hand, when receiving the check result information indicating agreement of the one-time password from the password check part 106, the contents transmitter 107 checks irregularity in formality and thereafter transmits the download request information to the contents server 40 (step S08). Then the contents transmitter 107 receives the contents data transmitted from the contents server 40 on the basis of the download request information and transmits this contents data to the communication terminal 30 (step S09). This permits the user of the communication terminal 30 to browse the desired contents or the like.

After completion of the transmission of the contents data to the communication terminal 30, the download monitoring server (not shown) of network 20 sends a notification indicating completion of the download of the contents, to the contents transmitter 107. Receiving this notification, the contents transmitter 107 outputs the indication information indicating execution of the deleting process of the one-time password, together with the download request information to the password deleting part 108. Receiving the indication information and the download request information, the password deleting part 108 performs the process of deleting the one-time password corresponding to the terminal identification information included in the download request information (the one-time password used for the check by the password check part 106 on the occasion of the download) from the password storage 104 (step S10).

After completion of the deleting process of the pertinent one-time password, the password deleting part 108 outputs the completion information indicating normal completion of the deleting process, to the contents transmitter 107. On the other hand, when there is no pertinent one-time password in the password storage 104, so as to fail to normally execute the deleting process, the password deleting part 108 outputs the completion information indicating the failure in the normal completion of the deleting process, to the contents transmitter 107. The contents transmitter 107 outputs the received completion information to the charge information generator 109.

At step S10, when receiving the completion information indicating the failure in normal completion of the deleting process from the contents transmitter 107, the charge information generator 109 transmits the incomplete transmission information indicating incompletion of transmission of the contents, to the contents server 40. In this case, the contents server 40 does not transmit the charge indication information to the charge information generator 109. On the other hand, when receiving the completion information indicating normal completion of the deleting process from the contents transmitter 107, the charge information generator 109 transmits the complete transmission information indicating completion of transmission of the contents to the communication terminal 30, to the contents server 40 (step S11). When receiving this complete transmission information, the contents server 40 determines whether the charge information to the user is to be generated, and transmits the charge indication information indicating the result of the determination, to the charge information generator 109 (step S12).

The charge information generator 109 generates the charge information to the user using the communication terminal 30, based on the received charge indication information (step S13). The generated charge information is fed to the charge information transmitter 110 and transmitted to the charge server 50 (step S14). Then a charge amount indicated by the charge information by the charge server 50 is managed for each user of communication terminal 30.

As described above, the contents delivery management apparatus 10 of the present embodiment is configured to delete the one-time password used for the check on the occasion of delivery of the contents, with the delivery of the contents and to generate the charge information to the user only upon completion of the deleting process. For this reason, even if communication error such as instantaneous chopping occurs in the network 20 to cause multiple notifications of completion of transmission of the contents in the contents delivery management apparatus 10, multiple generation of charge information can be avoided because the password corresponding to the contents once transmitted to the communication terminal 30 has already been deleted from the password storage 104. In this manner, the contents delivery management apparatus 10 is able to perform appropriate charging to the user, independent of the stability of the network.

The contents delivery management apparatus 10 is configured to generate the one-time password differing every reception of transmission request information from communication terminal 30 and to delete the one-time password once used. For this reason, even if the user saves the download screen and displays it twice or more times, multiple downloads of the contents will not be allowed, whereby the user's unauthorized download of contents can be effectively prevented.

## Claims

1. A contents delivery management apparatus comprising:
password transmitting means for transmitting a password to a communication terminal in accordance with reception of transmission request information transmitted from the communication terminal and requesting transmission of contents;
password storing means for storing said password transmitted by the password transmitting means;
contents transmitting means for receiving a password transmitted from the communication terminal, for checking said received password against the password stored in the password storing means, and for transmitting the contents to the communication terminal when said passwords agree with each other;
password deleting means for deleting the password stored in the password storing means when the transmission of the contents is accomplished by the contents transmitting means; and
charge information generating means for generating charge information to a user using the communication terminal when the deletion of the password is finished by the password deleting means.

2. The contents delivery management apparatus according to Claim 1, wherein the password is a one-time password differing every reception of the transmission request information.

3. A contents delivery management method comprising:
a step wherein password transmitting means transmits a password to a communication terminal in accordance with reception of transmission request information transmitted from the communication terminal and requesting transmission of contents;
a step wherein password storing means stores said password transmitted by the password transmitting means;
a step wherein contents transmitting means receives a password transmitted from the communication terminal, checks said received password against the password stored in the password storing means, and transmits the contents to the communication terminal when said passwords agree with each other;
a step wherein password deleting means deletes the password stored in the password storing means when the transmission of the contents is accomplished by the contents transmitting means; and
a step wherein charge information generating means generates charge information to a user using the communication terminal when the deletion of the password is finished by the password deleting means.

4. The contents delivery management method according to Claim 3, wherein the password is a one-time password differing every reception of the transmission request information.
